# EUROPEAN PATENT APPLICATION

(11) **EP 4 496 148 A1**
(43) Date of publication of application: **22.01.2025**
(21) Application number: 23769766.9
(22) Date of filing: 14.03.2023
(51) Int. Cl.: H01R 31/06

(54) **CONNECTOR ASSEMBLY USING NEW SHIELDING MATERIAL, AND VEHICLE**

(30) Priority: 14.03.2022 CN 202210250040
(71) Applicant: Jilin Zhong Ying High Technology Co., Ltd., Jilin 130028 (CN)
(72) Inventor: WANG, Chao, Changchun, Jilin 130028 (CN)
(74) Representative: Boult Wade Tennant LLP
(86) International application number: PCT/CN2023/081328
(87) International publication number: WO 2023/174264

(57) **Abstract**

The disclosure discloses a connector assembly using a new shielding material, and a vehicle, and relates to the technical field of automotive electrical appliances. The connector assembly includes an electrical connection skeleton and connectors, in which each of the connectors includes a connection terminal and an inner shell, two ends of the electrical connection skeleton are electrically connected to connection terminals respectively, periphery of the electrical connection skeleton is covered with an insulation layer and a conductive medium layer from the inside to the outside, the conductive medium layer is electrically connected to the inner shell, and the conductive medium layer is made of conductive plastic or conductive paint. In the present disclosure, an electrical connection skeleton is used to replace a multi-core copper cable, which reduces diameter of the cable, reduces weight of the cable, facilitates installation of the cable, reduces the friction with the vehicle shell, and extends the service life of the connector. Conductive plastics or conductive paint is used to replace the braided shielding net, which reduces the use of shielding net braiding equipment, occupies a small area, reduces the processing cost of the cables, and reduces the production cost of the connector.

## Description

### CROSS-REFERENCE TO RELATED APPLICATION

The present application claims priority of the Chinese patent application with the application number CN 202210250040.6, filed on March 14, 2022, and entitled "CONNECTOR ASSEMBLY USING NEW SHIELDING MATERIAL, AND VEHICLE", the entire contents of which are incorporated herein by reference.

### TECHNICAL FIELD

The disclosure relates to the technical field of automotive electrical appliances, and more specifically to a connector assembly using a new shielding material, and a vehicle.

### BACKGROUND

With the increasing popularity of new energy automobiles, equipment and facilities for the new energy automotive electrical appliances have also developed. Because the connector assembly on the new energy automobile is required to meet the requirement of high current, the conductive current is relatively high, and the diameter of a cable on the connector assembly also increases. At present, most of the cables on the connector assembly use multi-core copper cables, which are heavy and expensive, and thus become an obstacle to popularization of new energy automobiles. In addition, although multi-core cable is soft and can be easily processed and wired, due to its coarse diameter and significant weight, the cable may have frequent friction with the automobile shell during driving of the automobile, resulting in damage to the insulation layer of the cable and causing high-voltage discharge, which mildly causes damage to the vehicle and seriously causes serious traffic accidents.

In order to reduce the impact of electromagnetic interference, the conductive cable shields the electromagnetic interference generally by using a shielding net. At present, the commonly used shielding net is formed by braiding metal wires, and thus it is necessary to increase a shield braiding machine in the cable production equipment. The equipment has a high price and occupies a large area, causing that the price of the shielding cable of the connector remains high.

Therefore, there is an urgent need in the technical field of automotive electrical appliances for a connector cable with a low price and long service life, and a new type of cable

### SUMMARY

The purpose of the disclosure is to replace a multi-core copper cable with an electrical connection skeleton, which reduces diameter of the cable, reduces weight of the cable, facilitates installation of the cable, reduces the friction with the vehicle shell, and extends the service life of the connector assembly. Conductive plastics or conductive paint is used to replace the braided shielding net, which reduces the use of shielding net braiding equipment, occupies a small area, reduces the processing cost of the cables, and reduces the production cost of the connector assembly.

According to a first aspect of the disclosure, there is provided with a connector assembly using a new shielding material, including an electrical connection skeleton and connectors connected to two ends of the electrical connection skeleton, wherein each of the connectors includes a connection terminal and an inner shell with a shielding effect, the two ends of the electrical connection skeleton are electrically connected to connection terminals respectively, outer periphery of the electrical connection skeleton is covered with an insulation layer and a conductive medium layer from the inside to the outside, the conductive medium layer is electrically connected to the inner shell, and the conductive medium layer is made of conductive polymer material.

Optionally, the material of the connection terminal is copper or copper alloy, the material of the electrical connection skeleton is aluminum or aluminum alloy, and the electrical connection skeleton is electrically connected to the connection terminal by welding or crimping.

Optionally, the electrical connection skeleton is a rigid body and the tensile strength of the electrical connection skeleton is greater than 75 MPa.

Optionally, the conductive polymer material is a conductive paint, the conductive paint is a paint containing conductive particles, and the material of the conductive particles is one or more selected from the group consisting of metal, conductive ceramics, a carbon-containing conductor, a solid electrolyte, and a mixed conductor.

Optionally, a volume percentage of the conductive particles in the conductive paint is 3% to 95%.

Optionally, the conductive polymer material is conductive plastic, the conductive plastic is a polymeric material containing conductive particles, and the material of the conductive particles contains one or more selected from the group consisting of a metal, a conductive ceramic, a carbon-containing conductor, a solid electrolyte, and a mixed conductor; the material of the polymeric material contains one or more selected from the group consisting of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, poly(terephthalic acid), polyurethane elastomer, styrene block copolymer, perfluoroalkoxy alkane, chlorinated polyethylene, polyphenylene sulfide, polystyrene, crosslinked polyolefin, ethylene propylene rubber, Ethylene/vinyl acetate copolymer, chloroprene rubber, natural rubber, styrene butadiene rubber, nitrile butadiene rubber, silicone rubber, butadiene rubber, isoprene rubber, ethylene propylene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber , styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin.

Optionally, a volume percentage of the conductive particles in the conductive plastic is 3% to 95%.

Optionally, the material of the metal contains one or more selected from the group consisting of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy.

Optionally, the carbon-containing conductor contains one or more selected from the group consisting of graphite silver, graphene silver, graphite powder, carbon nanotube material, and graphene material.

Optionally, the conductive paint is attached on the outer periphery of the insulation layer by means of brush coating or dip coating or spray coating.

Optionally, the conductive plastic is formed on the outer periphery of the insulation layer by extrusion or injection molding or dip molding or blow molding or foaming or 3D printing processes.

Optionally, the inner shell is electrically connected to the conductive medium layer by means of conductive adhesive bonding or welding or screw connection or crimping or clamping.

Optionally, conductivity of the conductive medium layer is greater than 4.8×10⁶ S/m.

Optionally, an impedance between the conductive medium layer and the inner shell is less than 80 mΩ.

Optionally, a transfer impedance of the conductive medium layer is less than 100 mΩ.

Optionally, a transfer impedance of the inner shell is less than 100 mΩ.

Optionally, a shielding device is arranged between the inner shell and the conductive medium layer, and the shielding device is electrically connected to the inner shell and the conductive medium layer respectively.

Optionally, an impedance between the conductive medium layer and the shielding device is less than 80 mΩ, and an impedance between the shielding device and the inner shell is less than 80 mΩ.

Optionally, the electrical connection skeleton has a cross section in the shape of one or more selected from the group consisting of circular, oval, rectangular, polygonal, A-shaped, B-shaped, D-shaped, M-shaped, N-shaped, O-shaped, S-shaped, E-shaped, F-shaped, H-shaped, K-shaped, L-shaped, P-shaped, T-shaped, U-shaped, V-shaped, W-shaped, X-shaped, Y-shaped, Z-shaped, semi-arc, arc, and waved shape.

Optionally, the cross section of the electrical connection skeleton is of a polygon, and each corner of the polygon is rounded or chamfered.

Optionally, at least part of the electrical connection skeleton is a flexible body.

Optionally, the electrical connection skeleton includes at least one bending portion.

Optionally, outer periphery of the conductive medium layer is further wrapped with an outer insulation layer.

Optionally, a thickness of the conductive medium layer is 0.5 to 2.8 mm.

Optionally, a cross sectional area of the electrical connection skeleton is 3.5 to 240 mm².

Optionally, one of the connectors is a charging socket.

The disclosure further provides a vehicle, which includes a connector assembly using a new shielding material as described above and a vehicle body.

Optionally, a distance between the electrical connection skeleton and the vehicle body is greater than or equal to 4 mm.

The advantageous effects of the present disclosure are as follows.
1. An electrical connection skeleton is used to replace a multi-core copper cable, which reduces diameter of the cable, reduces weight of the cable, facilitates installation of the cable, reduces the friction with the vehicle shell, and extends the service life of the connector assembly.
2. Conductive plastics or conductive paint is used to replace the braided shielding net, which reduces the use of shielding net braiding equipment, occupies a small area, reduces the processing cost of the cables, and reduces the production cost of the connector assembly.
3. Metal particles are combined with a polymeric material or polymeric coating, which ensures the conductive property of the conductive medium layer, and production is carried out by means of brush coating or dip coating or extrusion, which does not need to add more devices and improves production efficiency.
4. The shielding device is arranged between the inner shell and the conductive medium layer, and the conductive medium layer and the shielding device can be fixed and electrically connected first, and the shielding device is in contact and electric connection with the inner shell during assembly, so as to improve the stability of shielding connection and reduce the difficulty of processing.

Other features and advantages of the present disclosure will become clear from the following detailed description of exemplary embodiments of the present disclosure with reference to the accompanying drawings.

### BRIEF DESCRIPTION OF THE DRAWINGS

The accompanying drawings incorporated in and forming part of the specification show embodiments of the present disclosure and, together with description thereof, are used to explain the principle of the present disclosure.
FIG. 1 is a structural schematic of a connector assembly using a new shielding material of the disclosure.
FIG. 2 is a cross-sectional view of an inner shell of a connector assembly using a new shielding material of the disclosure.
FIG. 3 is a structural schematic of a shielding device of a connector assembly using a new shielding material of the disclosure.
FIG. 4 is a structural schematic of another shielding device of a connector assembly using a new shielding material of the disclosure.

The reference numerals in the drawings are as below:
1. electrical connection skeleton; 11. insulation layer; 12. conductive medium layer; 13. outer insulation layer; 2. connector; 4. inner shell; 5. connection terminal; 6. shielding device.

### DETAILED DESCRIPTION

Various exemplary embodiments of the disclosure will now be described in detail with reference to the accompanying drawings. It should be noted that, unless otherwise specified, the relative arrangements, numerical expressions, and numerical values of parts and steps set forth in these embodiments do not limit the scope of the present disclosure.

The following description of at least one exemplary embodiment is in fact illustrative only and in no way constitutes any limitation to the present disclosure, and its application or use.

Technologies, methods and equipment known to those ordinarily skilled in the art may not be discussed in detail, but where appropriate, the technologies, methods and equipment as mentioned-above shall be considered as part of the specification.

In all the examples shown and discussed here, any specific value should be interpreted as merely exemplary and does not serve as limitation. Therefore, other examples of the exemplary embodiments may have different values.

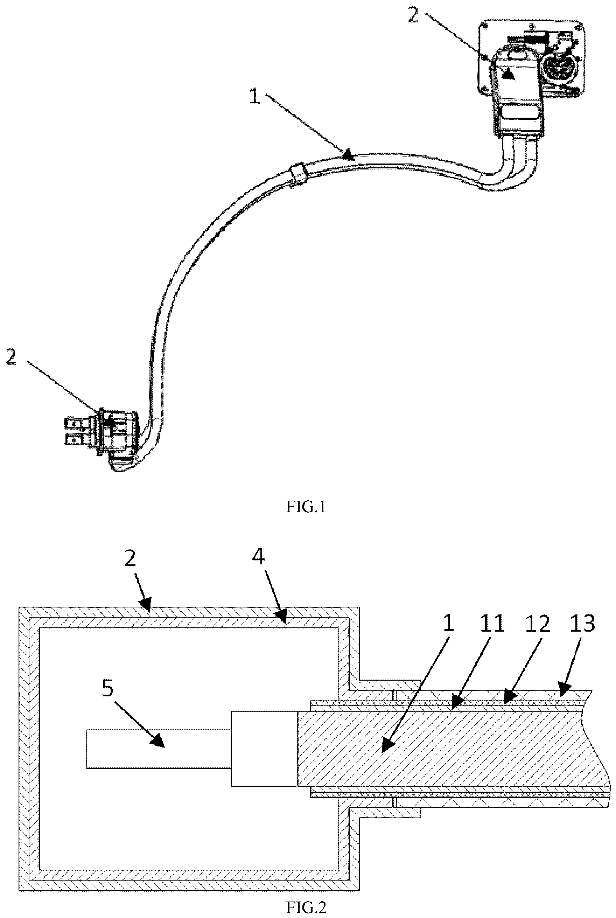

A connector assembly using a new shielding material includes an electrical connection skeleton 1 and connectors 2 connected to two ends of the electrical connection skeleton 1. As shown in FIGs. 1 and 2, the connector 2 includes a connection terminal 5 and an inner shell 4 with a shielding effect, the two ends of the electrical connection skeleton 1 are electrically connected to connection terminals 5, respectively, outer periphery of the electrical connection skeleton 1 is covered with an insulation layer 11 and a conductive medium layer 12 from the inside to the outside, the conductive medium layer 12 is electrically connected to the inner shell 4, and the conductive medium layer 12 is made of conductive polymer material.

At present, the charging cables on most of the connector assembly 2 use multi-core copper cables, which are heavy and expensive, and thus become an obstacle to popularization of new energy automobiles. In addition, although the multi-core cable is soft and can be easily processed and wired, due to its coarse diameter and significant weight, the cable will have frequent friction with the automobile shell during driving of the automobile, resulting in damage to the insulation layer of the cable and causing high-voltage discharge, which mildly causes damage to the vehicle and seriously causes serious traffic accidents. Therefore, in the present disclosure, the multi-core cable structure can be replaced with the cable form of the electrical connection skeleton 1, so that the cable can be fixed on the automobile shell, and may not have friction with the automobile shell along with vibration of the automobile, thereby extending the service life of the connector 2 and reducing the accident rate. The electrical connection skeleton 1 can be a single-core copper rod or aluminum rod.

In order to reduce the impact of electromagnetic interference, the conductive cable shields the electromagnetic interference generally by using a shielding net. At present, the commonly used shielding net is formed by braiding metal wires, and thus it is necessary to increase a shield braiding machine in the cable production equipment. The equipment has a high price and occupies a large area, causing that the price of the shielding cable of the connector 2 remains high.

The electrical connection skeleton 1 is mostly used to transmit high current inside, and a large electromagnetic field is generated when the current passes. In order to prevent the electromagnetic field generated by the high current from causing electromagnetic interference to the electrical appliances in the automobile and thus affecting the normal operation of other electrical appliances, it is therefore desirable to electromagnetically shield the electromagnetic field generated by the high current. The data communication cable, by contrast, transmits an electromagnetic signal inside. The electromagnetic signal may be interfered by the external electromagnetic field, resulting in the distortion of the electromagnetic signal, thus the signal cannot be effectively transmitted, therefore, electromagnetic shielding is needed to shield the external electromagnetic field interference.

The electromagnetic shielding involves mainly the use of shields to prevent the influence of a high-frequency electromagnetic field, so as to effectively control the radiation transmission of electromagnetic waves from a certain area to another area. The basic principle is that, a low resistance conductor material is used to make a shield, the electromagnetic wave is reflected on the surface of the shield, absorbed inside the shield and lost in the transmission process to produce shielding effect. In addition to the need for electromagnetic shielding of the electrical connection skeleton 1, its connection part with the connector 2 and the connection terminal 5 also needs to be particularly electromagnetically shielded. The two ends of the electrical connection skeleton 1 of the disclosure are connected to the connection terminals 5 of the connector 2, respectively, and these connection parts are arranged in the inner shell 4, and the inner shell 4 is electrically connected to the conductive medium layer 12 outside the electrical connection skeleton 1, so as to achieve the effect of complete shielding. The insulation layer 11 is arranged between the conductive medium layer 12 and the electrical connection skeleton 1 to prevent electrical connection between the two.

In the present disclosure, an electrical connection skeleton 1 is used to replace a multi-core copper cable, which reduces diameter of the cable, reduces weight of the cable, facilitates installation of the cable, reduces the friction with the vehicle shell, and extends the service life of the connector assembly. Conductive polymer material is used to replace the braided shielding net, which reduces the use of shielding net braiding equipment, occupies a small area, reduces the processing cost of the cables, and reduces the production cost of the connector assembly.

In some embodiments, the material of the connection terminal 5 is copper or copper alloy, the material of the electric connection skeleton 1 is aluminum or aluminum alloy, and the electrical connection skeleton 1 is electrically connected to the connection terminal 5 by welding or crimping. The electrical connection skeleton 1 is electrically connected to the connection terminal 5 by welding. Copper or copper alloy have high electrical conductivity and can be widely used in the field of electrical transmission. The electrical connection skeleton 1 is connected to the connection terminal 5 by welding or crimping. The welding methods adopted include one or more selected from the group consisting of resistance welding, friction welding, ultrasonic welding, arc welding, laser welding, electron beam welding, pressure diffusion welding and magnetic induction welding. The welding refers to that the concentrated thermal energy or pressure is used to create a fused connection at a position of contact between the connection terminal 5 and the electrical connection skeleton 1, to produce stable connection by the welding. Such welding can achieve connection of dissimilar materials, and has better conductive effect due to contact position fusion.

The resistance welding refers to a method that utilizes a strong current passing through the contact point between the electrode and the workpiece, and achieves welding by generating heat from the contact resistance.

The friction welding refers to a method that utilizes the heat generated by the friction of the workpiece contact surfaces as the heat source to make the workpiece undergo plastic deformation under the action of pressure, thereby achieves welding.

The ultrasonic welding refers to a method that utilizes high-frequency vibration waves transmitted to the surfaces of two objects to be welded, and under pressure, the surfaces of two objects rub against each other to form a fusion between molecular layers.

The arc welding refers to a method that electric arc is taken as the heat source and the physical phenomenon of air discharges is utilized to convert electrical energy into thermal and mechanical energy required for welding, so as to achieve the purpose of connecting metal, and the main methods include shielded metal arc welding, submerged arc welding, gas shielded welding and so on.

The laser welding method refers to an efficient and precise welding method that utilizes a laser beam with high energy density as a heat source.

The friction welding refers to a method that utilizes the heat generated by the friction of the workpiece contact surfaces as the heat source to make the workpiece undergo plastic deformation under the action of pressure, thereby achieves welding.

The electron beam welding method refers to a method that utilizes accelerated and focused electron beam to bombard the welding surface placed in vacuum or non-vacuum, so that the welded workpiece is melted to achieve welding.

The pressure welding method is a method of applying pressure to a weldment to make the joint surfaces be in contact closely and undergo a certain plastic deformation, thereby completing the welding.

The magnetic induction welding method refers to a method that instantaneous high-speed collision occurs between two workpieces to be welded under the action of strong pulsed magnetic field, and when surface of the material is subjected to high pressure waves, the atoms of the two materials meet in the interatomic distance, thus forming a stable metallurgical bond at the interface, which is a type of solid-state cold welding that can weld conductive metals with similar or dissimilar properties together.

The crimping refers to the production process that after the electrical connection skeleton 1 and the connection terminal 5 are assembled, the two are stamped into an integral whole by using a crimping machine. The advantage of crimping is its production capability, and a large amount of products with stable quality can be produced quickly by using an automatic crimping machine.

In some embodiments, the electrical connection skeleton 1 is a rigid body and the tensile strength of the electrical connection skeleton 1 is greater than 75 MPa. The rigid body refers to an object whose shape and size do not change during motion and under applied force, and the relative position of the internal points does not change. Absolutely rigid body does not actually exist, but is only an ideal model, because any object is more or less deformed after the force is applied thereto, and if the degree of deformation is extremely small relative to the geometric size of the object itself, and the deformation can be ignored when studying the movement of the object. Therefore, in the process of use of the electrical connection skeleton 1 made of rigid body material, the deformation generated is negligible and can be ignored, and the greater the tensile strength of the rigid body is, the less the deformation is.

In order to verify the influence on the torque at the time of bending of the electrical connection skeleton 1 and whether abnormal sound occurs in the vibration process, caused by the tensile strength of the electric connection skeleton 1, the inventor selects a sample of the electrical connection skeleton 1 with the same size specification and using different tensile strengths to test the torque at the time of bending of the electrical connection skeleton 1 and the abnormal sound in the vibration process.

The tensile value of the electrical connection skeleton 1 is tested by using a universal tension testing machine to fix the two ends of the electrical connection skeleton 1 on a tensile fixture of the universal tension testing machine, and to stretch the sample at a speed of 50 mm/min and record the tensile value at the time of being pulled broken. In this embodiment, the tensile value greater than 1600 N is a qualified value.

The torque of the electrical connection skeleton 1 is tested by using a torque tester to test the torque value by which the electrical connection skeleton 1 is deformed during bending when the electrical connection skeleton 1 is bent at 90° at the same radius and at the same speed, and in this embodiment, a torque value less than 60 N•m is an exemplary value.

Whether the electrical connection skeleton 1 produces abnormal sound is tested by selecting a sample of the electrical connection skeleton 1 with the same size specification and using different tensile strengths, assembling the connectors 2 of the same specification together and fixing them on a vibration test bench, and observing whether the electrical connection skeleton 1 produces abnormal sound in the vibration test process.

**Table 1: Influence of different tensile strengths on the torque value and abnormal sound of the electrical connection skeleton 1**

| Different tensile strengths (MPa) | | | | | | | | | | | |
|---|---|---|---|---|---|---|---|---|---|---|---|
| 60 | 70 | 75 | 85 | 120 | 230 | 280 | 330 | 380 | 430 | 480 | *500* |

| The tension value (N) when the electrical connection skeleton 1 is pulled broken | | | | | | | | | | | |
|---|---|---|---|---|---|---|---|---|---|---|---|
| 1525 | 1580 | 1683 | 1709 | 1759 | 1815 | 1856 | 1909 | 1950 | 1985 | 2042 | 2069 |

| Torque value at which bending is performed in a horizontal direction (N•m) | | | | | | | | | | | |
|---|---|---|---|---|---|---|---|---|---|---|---|
| 6 | 8 | 9 | 18 | 27 | 34 | 44 | 46 | 49 | 52 | 59 | 70 |

| Whether the electrical connection skeleton 1 produces abnormal sound | | | | | | | | | | | |
|---|---|---|---|---|---|---|---|---|---|---|---|
| YES | YES | NO | NO | NO | NO | NO | NO | NO | NO | NO | NO |

As can be seen from Table 1 above, when the tensile strength of the electrical connection skeleton 1 is less than 75 MPa, the tensile value of the electrical connection skeleton 1 when it is pulled broken is less than 1600 N. At this time, the strength of the electrical connection skeleton 1 itself is not high, and the electrical connection skeleton 1 is easily pulled broken when subjected to a small external force, resulting in function failure of the electrical connection skeleton 1, and thus the purpose of electric energy transmission cannot be achieved. On the other hand, because the larger the tensile strength of the electrical connection skeleton 1 is, the less easily the electrical connection skeleton 1 deforms, so in the vibration test process, the less easily the electrical connection skeleton 1 produces abnormal sound relative to vibration of the connectors 2 connected at both ends. On the contrary, the smaller the tensile strength of the electrical connection skeleton 1 is, the more easily the electrical connection skeleton 1 deforms, so in the vibration test process, the more easily the electrical connection skeleton 1 produces abnormal sound relative to vibration of the connectors 2 connected at both ends. As can be seen from Table 1 above, when the tensile strength of the electrical connection skeleton 1 is less than or equal to 75 MPa, the electrical connection skeleton 1 may produce abnormal sound during the vibration test. Therefore, the inventor exemplarily selects that the tensile strength is greater than 75 MPa. Meanwhile, when the tensile strength of the electrical connection skeleton 1 is greater than 480 MPa, the torque value when the electrical connection skeleton 1 is bent at 90° is greater than 60 N•m, at this time the electrical connection skeleton 1 is not easily bent. Therefore, the inventor further exemplarily selects that the tensile strength of the electrical connection skeleton 1 is greater than 75 MPa and less than or equal to 480 MPa.

In some embodiments, the conductive polymer material is a conductive paint, the conductive paint is a paint containing conductive particles, and the material of the conductive particles is one or more selected from the group consisting of metal, conductive ceramics, a carbon-containing conductor, a solid electrolyte, and a mixed conductor. The conductive paint is a kind of functional paint that incorporates conductive particles into chemical solvent and can be sprayed on non-metallic materials to shield electromagnetic waves. The conductive paint has advantages of room temperature curing and strong adhesion. The paint containing conductive particles has conductive property, that is, it has shielding function, and has the biggest advantage of low cost, being simple and practical and wide application. The most commonly used type is silver-based conductive paint, which is also one of the earliest varieties developed. Among them, the mixed conductor refers to a type of conductor that ionic conduction and electronic conduction exist simultaneously, is also known as a mixed ion-electron conductor, and is a type of solid material between an ionic conductor and an electronic conductor, and it has both ionic and electronic conductivity. The ionic conductivity and electronic conductivity of the mixed conductor having practical value are quite high.

Further, a volume percentage of the conductive particles in the conductive paint is 3% to 95%. If the volume percentage of the conductive particles is too small, the conductivity is insufficient and the ideal shielding effect cannot be achieved. Therefore, the inventor carries out tests on conductive paints with volume percentages of different conductive particles. If the conductivity of the conductive coating is less than 99%, it is regarded as unqualified, and the test results are shown in Table 2.

**Table 2: Influence of conductive paints with different volume percentages of conductive particles on the conductivity of the conductive coating**

| Volume percentages of different conductive particles | | | | | | | | | | | | |
|---|---|---|---|---|---|---|---|---|---|---|---|---|
| 2 | 3 | 5 | 10 | 20 | 30 | 40 | 55 | 70 | 80 | 90 | 95 | 96 |

| Electric conductivity of the conductive coatings (%) | | | | | | | | | | | | |
|---|---|---|---|---|---|---|---|---|---|---|---|---|
| 98.9 | 99 | 99.1 | 99.1 | 99.2 | 99.2 | 99.3 | 99.3 | 99.4 | 99.5 | 99.5 | 99.6 | 99.6 |

As can be seen from Table 2, when the volume percentage of the conductive particles of the conductive paint is less than 3%, the conductivity of the conductive paint is less than 99%, which can not meet the needs; when the volume percentage of the conductive particles of the conductive paint is greater than 95% and the conductivity does not increase, and the required process requirement is becoming higher and higher, therefore, the inventor prefers that the volume percentage of the conductive particles in the conductive paint is 3% to 95%.

In some embodiments, the conductive polymer material is conductive plastic, the conductive plastic is a polymeric material containing conductive particles, including conductive plastic and conductive rubber; the material of the conductive particles contains one or more selected from the group consisting of a metal, a conductive ceramic, a carbon-containing conductor, a solid electrolyte, and a mixed conductor; the material of the polymeric material contains one or more selected from the group consisting of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, poly(terephthalic acid)(i.e., polyethylene terephthalate), polyurethane elastomer, styrene block copolymer, perfluoroalkoxy alkane, chlorinated polyethylene, polyphenylene sulfide, polystyrene, crosslinked polyolefin, EPR (ethylene propylene rubber), Ethylene/vinyl acetate copolymer, chloroprene rubber, natural rubber, styrene butadiene rubber, nitrile butadiene rubber, silicone rubber, butadiene rubber, isoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber , styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin. Conductive plastic or conductive rubber containing different particles can be selected as needed.

Further, a volume percentage of the conductive particles in the conductive plastics is 3% to 95%. If the volume percentage of the conductive particles is too small, the conductivity of the conductive plastic is insufficient and the ideal shielding effect cannot be achieved. Therefore, the inventor carries out tests on conductive plastics with volume percentages of different conductive particles. If the conductivity of the conductive plastic is less than 99%, it is regarded as unqualified, and the test results are shown in Table 3.

**Table 3: Influence of conductive paints with different volume percentage of conductive particles on the conductivity of the conductive coating**

| Volume percentages of different conductive particles | | | | | | | | | | | | |
|---|---|---|---|---|---|---|---|---|---|---|---|---|
| 2 | 3 | 5 | 10 | 20 | 30 | 40 | 55 | 70 | 80 | 90 | 95 | 96 |

| Electric conductivity of the conductive coatings (%) | | | | | | | | | | | | |
|---|---|---|---|---|---|---|---|---|---|---|---|---|
| 98.9 | 99.1 | 99.1 | 99.2 | 99.2 | 99.2 | 99.3 | 99.3 | 99.4 | 99.4 | 99.5 | 99.6 | 99.6 |

As can be seen from Table 3, when the volume percentage of the conductive particles of the conductive paint is less than 3%, the conductivity of the conductive plastic is less than 99%, which can not meet the needs; when the volume percentage of the conductive particles of the conductive plastic is greater than 95% and the conductivity does not increase, and the required process requirement is becoming higher and higher, therefore, the inventor exemplarily selects that the volume percentage of the conductive particles in the conductive plastics is 3% to 95%.

In some embodiments, the material of the metal contains one or more selected from the group consisting of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy. In order to demonstrate the influence of different metal materials on the conductivity of the conductive paint and the conductive plastic, the inventor carries out tests taking conductive plastics as an example, by using metal particles of the same specification, the same size and different materials to make samples of the conductive plastics, to test the electric conductivity of the conductive plastics respectively, and the experimental results are shown in Table 4 below. In this embodiment, the electric conductivity of the conductive plastic being greater than 99% is regarded as an ideal value.

**Table 4: Influence of the metal particles of different materials on electric conductivity of the conductive plastics**

| | | | | | | | | | | | | | | | | |
|---|---|---|---|---|---|---|---|---|---|---|---|---|---|---|---|---|
| Metal particles of different materials | | | | | | | | | | | | | | | | |
| Gol d | Silve r | Coppe r | Nicke l | | Titaniu m | Tin | | Aluminu m | Cadmiu m | | Zirconiu m | Chromiu m | | Cobal t | Mangane se | Zin c |
| Electric conductivity of the conductive plastics (%) | | | | | | | | | | | | | | | | |
| 99.8 | 99.9 | 99.8 | 99.5 | | 99.5 | 99. 5 | | 99.6 | 99.3 | | 99.2 | 99.2 | | 99.3 | 99.3 | 99. 3 |
| Metal particles of different materials | | | | | | | | | | | | | | | | |
| Telluriu m | | Beryllium | | Tin-lead Alloy | | | Silver-antimony Alloy | | | Palladium | | | Palladium-nickel Alloy | | Silver-gold-zirconium Alloy | |
| Electric conductivity of the conductive plastics (%) | | | | | | | | | | | | | | | | |
| 99.4 | | 99.4 | | 99.5 | | | 99.9 | | | 99.2 | | | 99.4 | | 99.9 | |

As can be seen from Table 4, the electric conductivity of the conductive plastic made of the selected different metal particles is within the range of the ideal value. In addition, phosphorus is a non-metal material and cannot be directly used as material of the conductive plating, but it can be added into other metals to form alloy to improve the conductive and mechanical properties of the metal itself. Therefore, the inventor sets that the material of the metal particles is one or more selected from the group consisting of gold, silver, copper, nickel, titanium, tin, aluminum, cadmium, zirconium, chromium, cobalt, manganese, zinc, tin-lead alloy, silver-antimony alloy, palladium, palladium-nickel alloy or silver-gold-zirconium alloy.

In some embodiments, the carbon-containing conductor contains one or more selected from the group consisting of graphite-silver composite, graphene-silver composite, graphite powder, carbon nanotube material, and graphene material. Graphite powder is a kind of mineral powder, mainly composed of a carbon simple substance, soft, black and gray; Graphite powder is a good non-metallic conductive material. Carbon nanotubes have good electrical conductivity, and because the carbon nanotubes have the same structure as the lamellar structure of graphite, they have good electrical properties. Graphene has extremely high electrical properties, and the carbon-containing conductors containing these three materials have high conductivity and good shielding performance, which can achieve electromagnetic shielding to the electrical connection skeleton 1 very well.

In some embodiments, the conductive paint is attached on the outer periphery of the insulation layer 11 by brush coating or dip coating or spray coating. Brush coating refers to a method of using a variety of paintbrushes and flat brushes to dip the paint to brush on the surface of the product and form a uniform coating, which is one of the earliest and most common coating methods. The advantage of the brush coating method is that there is almost no need for equipment fixture investment, saving coating materials, and generally no need of a covering process. Dip coating is to immerse the object to be coated entirely in a tank containing the paint for a short period of time and then to remove the object from the tank, and redundant coating liquid flows back into the tank. The dip coating has characteristics of high production efficiency, simple operation and less paint loss. The spray coating refers to a coating method in which the coating material is dispersed into uniform and fine droplets by a spray gun or a dish atomizer with the help of pressure or centrifugal force and is applied on the surface of the insulation layer 11. The spraying can be divided into air spraying, airless spraying, electrostatic spraying and various derivative methods of the above basic spraying forms, such as large flow and low pressure atomization spraying, thermal spraying, automatic spraying, and multi-group spraying and so on.

In some embodiments, the conductive plastic is formed on the outer periphery of the insulation layer 11 by extrusion or injection molding or dip molding or blow molding or foaming or 3D printing processes.

The extrusion process is also known as extrusion molding in plastic processing, which is an efficient, continuous, low-cost molding processing method, and is a technology that appears earlier in the processing of polymer materials. Extrusion forming is a forming processing method in the polymer processing field which has the most production varieties, the most changes, high productivity, strong adaptability, wide use, and the largest proportion of yield. In the layout of the production equipment, the metal wire braiding machine with a large occupied area can no longer be used, and three extruding machines with the insulation layer 11, the conductive medium layer 12 and the outer insulation layer 13 can be placed side by side. The electrical connection skeleton 1 passes through each of the above-mentioned extruding machines and is successively covered with the insulation layer 11, the conductive medium layer 12 and the outer insulation layer 13. In order to make the outer insulation layer 13 be easily detached from the conductive medium layer 12, lubricant can further be added between the conductive medium layer 12 and the outer insulation layer 13.

The injection molding process refers to the process of making a semi-finished part of a certain shape by pressurizing, injecting, cooling and disconnecting the molten raw materials.

The dip molding process refers to the process of electrically heating the workpiece to reach a certain temperature, and then dipping the workpiece into the dipping liquid to solidify the dipping liquid on the workpiece.

The blow molding process refers to using an extruder to extrude a tubular blank, putting the tubular blank in the mold when it is still hot, blowing compressed air into the mold to blow up the tubular blank to reach the mold cavity shape, and getting a product after cooling and shaping the tubular blank. The blow molding process has the advantages that it is suitable for a variety of plastics, can produce large products, can realize high production efficiency, uniform blank temperature and less equipment investment.

The foaming process refers to that in the foam forming process or in the foamed polymer material, the honeycomb or porous structure is formed through the addition and reaction of physical blowing agent or chemical blowing agent. The basic steps of foam forming include forming a foam core, growing or expanding the foam core, and stabilizing the foam core. Under the given temperature and pressure conditions, the solubility of the gas decreases, so as to reach the saturation state, so that the excess gas is expelled and bubbles are formed, thus achieving nucleus formation.

The 3D printing process is a kind of rapid proto-typing technology, also known as additive manufacturing, and is a technology in which an object is constructed by printing layer by layer using an adhesive material such as a powdered metal or plastic based on a digital model file.

In some embodiments, the inner shell 4 is electrically connected to the conductive medium layer 12 by conductive adhesive bonding or welding or crimping or clamping. Conductive adhesive is a kind of adhesive with certain electrical conductivity after being cured or dried. It can connect a variety of conductive materials together to form an electrical path between the connected materials. In the electronic industry, the conductive adhesive has become an indispensable new material. The connection by conductive adhesive can ensure the conductivity between the inner shell 4 and the conductive medium layer 12, and play a better shielding effect.

The welding refers to that the inner shell 4 and the conductive medium layer 12 are provided with welding surfaces, and a welding machine is used to melt and connect the welding surfaces together, so that the inner shell 4 and the conductive medium layer 12 are connected together stably. The welding machine includes a hot melt welding machine and an ultrasonic welding machine.

The crimping refers to a production process that after the inner shell 4 and the conductive medium layer 12 are assembled, the two are stamped into an integral whole using a crimping machine. The advantage of crimping is mass production, and a large amount of products with stable quality can be produced quickly by using an automatic crimping machine.

The clamping refers to that corresponding clamping claw or clamping slot are disposed on the inner shell 4 and the conductive medium layer 12 respectively, which are connected together by being assembled through the clamping slot or clamping claw. The clamping method has advantages of fast connection and detachability.

In some embodiments, the conductivity of the conductive medium layer 12 is greater than 4.8×10⁶ S/m.

The conductivity of the conductive medium layer 12 should be as large as possible so that the eddy current generated by the conductive medium layer 12 may flow back to the energy source or ground position without obstruction. If the conductivity of the conductive medium layer 12 is small, the current generated in the conductive medium layer 12 is too small, and it is not easy to derive the eddy current, thus affecting the shielding effect of the conductive medium layer 12.

In order to verify the influence of the conductivity of the conductive medium layer 12 on the shielding effect, the inventor selects electrical connection skeletons 1 of the same specification and the insulation layer 11, and the conductive medium layers 12 of the same specification that are made of materials with different conductivities to make a series of samples to respectively test the shielding effect, and the experimental results are shown in Table 5 below. In this embodiment, the shielding performance value greater than 40 dB is the ideal value.

The test method of the shielding performance value is to use test instrument to output a signal value (this value is the test value 2) to the electrical connection skeleton 1, and to provide a detection device outside the insulation layer 11, and the detection device detects a signal value (this value is the test value 1). Shielding performance value = test value 2 - test value 1.

**Table 5: Influence of the conductivity of the conductive medium layer 12 on the shielding performance**

| Conductivity of the conductive medium layer 12 (×10⁶ S/m) | | | | | | | | | |
|---|---|---|---|---|---|---|---|---|---|
| 4.6 | 4.7 | 4.8 | 4.9 | 5.0 | 5.1 | 5.2 | 5.3 | 5.4 | 5.5 |

| Shielding performance value (dB) | | | | | | | | | |
|---|---|---|---|---|---|---|---|---|---|
| 33 | 38 | 41 | 46 | 48 | 51 | 56 | 59 | 63 | 65 |

As can be seen from Table 5, when the conductivity of the conductive medium layer 12 is less than 4.8×10⁶ S/m, the shielding performance value is less than 40dB, which does not meet the requirement of the ideal value; when the conductivity of conductive medium layer 12 is greater than or equal to 4.8×10⁶ S/m, the shielding performance values all meet the requirement of the ideal value, and the trend is getting better and better. Therefore, the inventor sets the conductivity of the conductive medium layer 12 to be greater than or equal to 4.8×10⁶ S/m.

In some embodiments, the impedance between the conductive medium layer 12 and the inner shell 4 is less than 80 mΩ.

The impedance between the conductive medium layer 12 and the inner shell 4 shall be as small as possible, so that the current generated by the inner shell 4 may flow back without obstruction to the energy source or the grounding position. If the impedance between the conductive medium layer 12 and the inner shell 4 is large, high current may be generated between the conductive medium layer 12 and the inner shell 4, resulting in a large radiation at the cable connection.

In order to verify the influence of the impedance value between the conductive medium layer 12 and the inner shell 4 on the shielding effect, the inventor selects the same specification for the electrical connection skeleton 1, the connector 2 and the connection terminal 5, and uses different impedances between the conductive medium layer 12 and the inner shell 4 to make a series of samples to respectively test the shielding effect, and the experimental results are shown in Table 6 below. In this embodiment, the shielding performance value greater than 40 dB is regarded as the ideal value.

The test method of the shielding performance value is to use test instrument to output a signal value (this value is the test value 2) to the electrical connection skeleton 1, and to provide a detection device outside the electrical connection skeleton 1, and the detection device detects a signal value (this value is the test value 1). Shielding performance value = test value 2 - test value 1.

**Table 6: Influence of impedance between the conductive medium layer 12 and the inner shell 4 on the shielding performance**

| Measuring parameter | Impedance between the conductive medium layer 12 and the inner shell 4 (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 76 | 73 | 71 | 66 | 61 | 57 | 52 | 47 | 43 | 33 | 28 |

As can be seen from Table 6, when the impedance value between the conductive medium layer 12 and the inner shell 4 is greater than 80 mΩ, the shielding performance value is less than 40 dB, which does not meet the ideal value requirement; when the impedance value between the conductive medium layer 12 and the inner shell 4 is less than 80 mΩ, the shielding performance values all meet the ideal value requirement, and the trend is getting better and better. Therefore, the inventor sets the impedance between the conductive medium layer 12 and the inner shell 4 to be less than 80 mΩ.

In some embodiments, the transfer impedance of the conductive medium layer 12 is less than 100 mΩ. The shielding material usually uses the transfer impedance to characterize the shielding effect of the conductive medium layer 12, and the smaller the transfer impedance is, the better the shielding effect is. The transfer impedance of the conductive medium layer 12 is defined as the ratio of the differential mode voltage U induced by the shield per unit length to the current Is passing through the shield surface, i.e.,

Z_{T}=U/I_{S}, so that it can be understood that the transfer impedance of the conductive medium layer 12 converts the current of the conductive medium layer 12 into differential mode interference. The smaller the transfer impedance is, the better it is. That is, better shielding performance can be obtained by reducing the differential mode interference conversion.

In order to verify the influence of the conductive medium layer 12 with different transfer impedance values on the shielding effect, the inventor selects the same specification for the electrical connection skeleton 1, the connector 2 and the connection terminal 5, and uses the conductive medium layer 12 having different transfer impedance values to make a series of samples to respectively test the shielding effect, and the experimental results are shown in Table 7 below. In this embodiment, the shielding performance value greater than 40 dB is the ideal value.

The test method of the shielding performance value is to use test instrument to output a signal value (this value is the test value 2) to the electrical connection skeleton 1, and to provide a detection device outside the electrical connection skeleton 1, and the detection device detects a signal value (this value is the test value 1). Shielding performance value = test value 2 - test value 1.

**Table 7: Influence of transfer impedance of the conductive medium layer 12 on the shielding performance**

| Measuring parameter | Transfer impedance of the conductive medium layer 12 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 75 | 71 | 66 | 63 | 58 | 53 | 46 | 42 | 30 | 27 |

As can be seen from Table 7, when the transfer impedance value of the conductive medium layer 12 is greater than 100 mΩ, the shielding performance value of the conductive medium layer 12 is less than 40 dB, which does not meet the requirement of the ideal value; and when the transfer impedance value of the conductive medium layer 12 is less than 100 mΩ, the shielding performance values of conductive medium layers 12 all meet the requirement of the ideal value, and the trend is getting better and better, therefore, the inventor sets the transfer impedance of the conductive medium layer 12 to be less than 100 mΩ.

In some embodiments, the transfer impedance of the inner shell 4 is less than 100 mΩ. In order to verify the influence of the inner shell 4 having different transfer impedance values on the shielding effect, the inventor selects the same specification for the electrical connection skeleton 1, the connector 2 and the connection terminal 5, and uses the inner shell 4 having different transfer impedance values to make a series of samples to respectively test the shielding effect, and the experimental results are shown in Table 8 below. In this embodiment, the shielding performance value greater than 40 dB is the ideal value.

The test method of the shielding performance value is to use test instrument to output a signal value (this value is the test value 2) to the electrical connection skeleton 1, and to provide a detection device outside the inner shell 4, and the detection device detects a signal value (this value is the test value 1). Shielding performance value = test value 2 - test value 1.

**Table 8: Influence of transfer impedance of the inner shell 4 on the shielding performance**

| Measuring parameter | Transfer impedance of the inner shell 4 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 75 | 71 | 66 | 63 | 58 | 53 | 46 | 42 | 30 | 27 |

As can be seen from Table 8 above, when the transfer impedance value of the inner shell 4 is greater than 100 mΩ, the shielding performance value of the inner shell 4 is less than 40 dB, which does not meet the requirement of the ideal value; and when the transfer impedance value of the inner shell 4 is less than 100 mΩ, the shielding performance values of inner shells 4 all meet the requirement of the ideal value, and the trend is getting better and better, therefore, the inventor sets the transfer impedance of the inner shell 4 to be less than 100 mΩ.

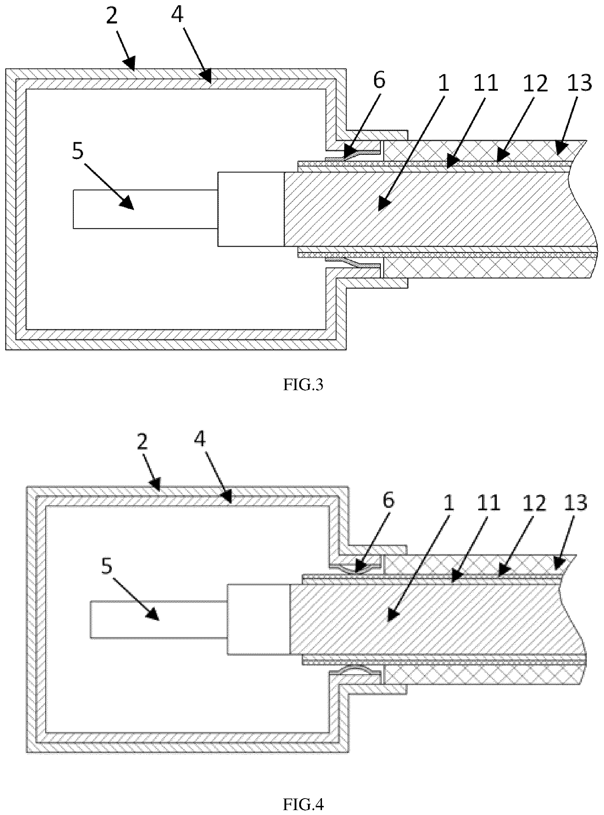

In some embodiments, a shielding device 6 is arranged between the inner shell 4 and the conductive medium layer 12. As shown in FIG. 3, the shielding device 6 is electrically connected to the inner shell 4 and the conductive medium layer 12 respectively.

The inner shell 4 is generally installed inside the connector 2 and is formed integrally with the connector. In one embodiment, the inner shell 4 may be made of conductive plastic material and is injected together with the outer shell of the connector 2 to be molded. When the electrical connection skeleton 1 and connector 2 are assembled, it is difficult to realize the welding between the inner shell 4 and the conductive medium layer 12. If the inner shell 4 is only in contact with the conductive medium layer 12, the inner shell 4 and the conductive medium layer 12 are both rigid, and there may be a gap between the bonding surfaces, resulting in increased contact resistance, affecting the shielding effect of the inner shell 4 and the conductive medium layer 12.

The shielding device 6 can make the inner shell 4 be more fully in contact with the conductive medium layer 12, and the shielding function of the connector 2 is more complete and the shielding effect is better. The shielding device 6 may be a metal sleeve which, before assembling the wire harness of the connector, sleeves on the conductive medium layer 12 of the electrical connection skeleton 1 at first, and the shielding device 6 is connected closely with the conductive medium layer 12 by crimping or welding. When the connector 2 is assembled, the shielding device 6 is directly in contact with the inner shell 4. Because the shielding device 6 is made of metal and has better conductivity, the contact resistance between the inner shell 4 and the conductive medium layer 12 is reduced, so that the shielding function of the connector 2 is more complete and the shielding effect is better.

In another embodiment, the shielding device 6 is a conductive elastic sheet, and as shown in FIGs. 3 and 4, the conductive elastic sheet is at least partially elastic, and the conductive elastic sheet is electrically connected to both of the inner shell 4 and the conductive medium layer 12, thus forming a complete shielding structure. One method is that the conductive elastic sheet is fixed and electrically connected to the conductive medium layer 12, and the other end is in contact and electrically connected with the inner shell 4. The other method is that two ends of the conductive elastic sheet are fixed and electrically connected to the conductive medium layer 12, and the middle position is raised and is in contact and electrically connected with the inner shell 4. The conductive elastic sheet is at least partially elastic. The outer diameter of the protruding position of the conductive elastic sheet is greater than the inner diameter of the connection position of the inner shell 4, so that after the connector 2 is assembled, the conductive elastic sheet is tightly connected to the inner shell 4 by an elastic force.

In some embodiments, an impedance between the conductive medium layer 12 and the shielding device 6 is less than 80 mΩ, and an impedance between the shielding device 6 and the inner shell 4 is less than 80 mΩ.

In order to verify the influence of the impedance value between the conductive medium layer 12 and the shielding device 6 on the shielding effect, the inventor selects the same specification for the electrical connection skeleton 1, the connector 2, the inner shell 4 and the connection terminal 5 , and uses different impedances between the conductive medium layer 12 and the shielding device 6 to make a series of samples to respectively test the shielding effect, and the experimental results are shown in Table 9 below. In this embodiment, the shielding performance value greater than 40 dB is regarded as the ideal value.

The test method of the shielding performance value is to use test instrument to output a signal value (this value is the test value 2) to the electrical connection skeleton 1, and to provide a detection device outside the shielding device 6, and the detection device detects a signal value (this value is the test value 1). Shielding performance value = test value 2 - test value 1.

**Table 9: Influence of impedance between the conductive medium layer 12 and the shielding device 6 on the shielding performance**

| Measuring parameter | Impedance between the conductive medium layer 12 and the shielding device 6 (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 75 | 73 | 69 | 66 | 61 | 58 | 52 | 46 | 43 | 35 | 28 |

As can be seen from Table 9, when the impedance value between the conductive medium layer 12 and the shielding device 6 is greater than 80 mΩ, the shielding performance value is less than 40 dB, which does not meet the ideal value requirements; when the impedance value between the conductive medium layer 12 and the shielding device 6 is less than 80 mΩ, the shielding performance values all meet the ideal value requirements, and the trend is getting better and better. Therefore, the inventor sets the impedance between the conductive medium layer 12 and the shielding device 6 to be less than 80 mΩ.

In a similar way, the inventor exemplarily selects that the impedance between the shielding device 6 and the inner shell 4 is less than 80 mΩ.

In some embodiments, the electrical connection skeleton 1 has a cross section in the shape of one or more selected from the group consisting of circular, oval, rectangular, polygonal, A-shaped, B-shaped, D-shaped, M-shaped, N-shaped, O-shaped, S-shaped, E-shaped, F-shaped, H-shaped, K-shaped, L-shaped, T-shaped, P-shaped, U-shaped, V-shaped, W-shaped, X-shaped, Y-shaped, Z-shaped, semi-arc, arc, and waved shape. In actual use, electrical connection skeletons 1 with different cross sections can be used according to the need.

In some embodiments, the cross-section shape of the electrical connection skeleton 1 is a polygon, and corners of the polygon are all rounded or chamfered, When the cross section of the electrical connection skeleton 1 has edges and corners, the edges and corners can be rounded or chamfered to prevent the sharp portions thereof from causing damage to the insulation layer 11.

In some embodiments, at least part of the electrical connection skeleton 1 is a flexible body. The flexible body can ensure that the electrical connection skeleton 1 can be bent by a large angle, to be conveniently disposed in the vehicle body with a large corner.

In some embodiments, the electrical connection skeleton 1 includes at least one bending portion, to meet the needs of installation in the vehicle body.

In some embodiments, the outer periphery of the conductive medium layer 12 is further wrapped with an outer insulation layer 13. The outer insulation layer 13 is used to insulate the conductive medium layer 12 from the external equipment to prevent the possibility of short circuit that may occur when the conductive medium layer 12 is connected to the vehicle body.

In some embodiments, the thickness of the conductive medium layer 12 is 0.5 to 2.8 mm. If the thickness of the conductive medium layer 12 is too small, the conductivity is insufficient, and the shielding effect cannot meet the requirements. If the thickness of the conductive medium layer 12 is too large, there may be waste of material and increase of weight of the vehicle body. In order to demonstrate the influence of the conductive medium layer 12 with different thicknesses on the electric conductivity of the conductive medium layer 12, the inventor uses materials with different thicknesses and made of the same material to make samples of the conductive medium layer 12 and test the electric conductivity respectively, and the experimental results are shown in Table 10. In this embodiment, the electric conductivity of the conductive medium layer 12 greater than 99% is ideal.

**Table 10: Influence of the thickness of the conductive medium layer 12 on the conductivity**

| Thickness of the conductive medium layer 12 (mm) | | | | | | | | | | | | | | |
|---|---|---|---|---|---|---|---|---|---|---|---|---|---|---|
| 0.4 | 0.5 | 0.6 | 0.8 | 1.0 | 1.2 | 1.4 | 1.6 | 1.8 | 2.0 | 2.2 | 2.4 | 2.6 | 2.8 | 2.9 |

| Electric conductivity (%) | | | | | | | | | | | | | | |
|---|---|---|---|---|---|---|---|---|---|---|---|---|---|---|
| 98.9 | 99 | 99 | 99.1 | 99.1 | 99.2 | 99.3 | 99.4 | 99.5 | 99.6 | 99.7 | 99.8 | 99.8 | 99.9 | 99.9 |

As can be seen from Table 10, when the thickness of the conductive medium layer 12 is less than 0.5 mm, the conductivity is less than 99%, which is unqualified; when the thickness of the conductive medium layer 12 is greater than 2.8 mm, the conductivity does not increase. Moreover, thicker conductive medium layer 12 may increase the cost and weight of the vehicle body, thus the inventor exemplarily selects that the thickness of the conductive medium layer 12 is 0.5 to 2.8 mm.

In some embodiments, the electrical connection skeleton 1 has a cross-sectional area of 3.5mm² to 240 mm². The cross-sectional area of the electrical connection skeleton 1 determines the current that the electrical connection skeleton 1 can conduct. Under normal circumstances, the electrical connection skeleton 1 that achieves signal conduction has a small current and a small cross-sectional area. For example, the smallest cross-sectional area of the electrical connection skeleton 1 for transmitting signals can reach 3.5 mm². The electrical connection skeleton 1 that achieves power conduction has a large current and a large cross-sectional area. For example, a car battery harness has a largest cross-sectional area of the conductor of 240 mm².

In some embodiments, one of the connectors 2 is a charging socket. With the increasing popularity of new energy automobiles, equipment and facilities supplying power to the new energy automobiles have also developed. Because the rechargeable battery on the new energy automobile is required to meet the requirements of fast charging, a charging socket assembly is required. In the present disclosure, one of the connectors 2 is a charging socket which is connected to a charging gun, and the connector 2 on the other end is a high-voltage connector, which is connected to the rechargeable battery to achieve the purpose of charging the rechargeable battery.

The disclosure discloses a vehicle, which includes a connector assembly using a new shielding material as described above and a vehicle body.

Further, the distance between the electrical connection skeleton 1 and the vehicle body is greater than or equal to 4 mm. In the movement of the automobile, the electrical connection skeleton 1 is easy to interfere with the vehicle body to produce abnormal sound, and according to the inventor's test, when the distance between the electrical connection skeleton 1 and the vehicle body is greater than or equal to 4 mm, it can effectively eliminate the appearance of abnormal sound. The electrical connection skeleton 1 extends along the direction of the vehicle body, and can be as close to the vehicle body as possible, which greatly saves the use of the electrical connection skeleton 1 and reduces the cost of the connector assembly.

Although some specific embodiments of the disclosure have been described in detail by examples, it should be understood by those skilled in the art that the above examples are intended only for illustration and not to limit the scope of the disclosure. Those skilled in the art should understand that the above embodiments may be modified without departing from the spirit or scope of the disclosure. The scope of the disclosure is limited by the appended claims.

## Claims

1. A connector assembly using a new shielding material, comprising an electrical connection skeleton and connectors connected to two ends of the electrical connection skeleton, wherein each of the connectors comprises a connection terminal and an inner shell with a shielding effect, the two ends of the electrical connection skeleton are electrically connected to connection terminals respectively, an outer periphery of the electrical connection skeleton is covered with an insulation layer and a conductive medium layer from the inside to the outside, the conductive medium layer is electrically connected to the inner shell, and the conductive medium layer is made of conductive polymer material.

2. The connector assembly using a new shielding material according to claim 1, wherein, the material of the connection terminal is copper or copper alloy, the material of the electrical connection skeleton is aluminum or aluminum alloy, and the electrical connection skeleton is electrically connected to the connection terminal by welding or crimping.

3. The connector assembly using a new shielding material according to claim 1, wherein the electrical connection skeleton is a rigid body and the tensile strength of the electrical connection skeleton is greater than 75 MPa.

4. The connector assembly using a new shielding material according to claim 1, wherein the conductive polymer material is a conductive paint, the conductive paint is a paint containing conductive particles, and the material of the conductive particles is one or more selected from the group consisting of metal, conductive ceramics, a carbon-containing conductor, a solid electrolyte, and a mixed conductor.

5. The connector assembly using a new shielding material according to claim 4, wherein a volume percentage of the conductive particles in the conductive paint is 3% to 95%.

6. The connector assembly using a new shielding material according to claim 1, wherein the conductive polymer material is conductive plastic, the conductive plastic is a polymeric material containing conductive particles, and the material of the conductive particles comprises one or more selected from the group consisting of a metal, a conductive ceramic, a carbon-containing conductor, a solid electrolyte, and a mixed conductor; the material of the polymeric material comprises one or more of tetraphenyl ethylene, polyvinyl chloride, polyethylene, polyamide, polytetrafluoroethylene, tetrafluoroethylene/hexafluoroethylene copolymer, ethylene/tetrafluoroethylene copolymer, polypropylene, polyvinylidene fluoride, polyurethane, poly(terephthalic acid), polyurethane elastomer, styrene block copolymer, perfluoroalkoxy alkane, chlorinated polyethylene, polyphenylene sulfide, polystyrene, crosslinked polyolefin, ethylene propylene rubber, Ethylene/vinyl acetate copolymer, chloroprene rubber, natural rubber, styrene butadiene rubber, nitrile butadiene rubber, silicone rubber, butadiene rubber, isoprene rubber, ethylene propylene rubber, butyl rubber, fluororubber, polyurethane rubber, polyacrylate rubber, chlorosulfonated polyethylene rubber, epichlorohydrin rubber, chlorinated polyethylene rubber, chlorosulfurized rubber , styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, polyformaldehyde resin.

7. The connector assembly using a new shielding material according to claim 6, wherein a volume percentage of the conductive particles in the conductive plastic is 3% to 95%.

8. The connector assembly using a new shielding material according to any of claim 4 or 6, wherein, the material of the metal contains one or more of gold, silver, copper, nickel, titanium, tin, aluminum, cadmium, zirconium, chromium, cobalt, manganese, zinc, phosphorus, tellurium, beryllium, tin-lead alloy, silver-antimony alloy, palladium, palladium-nickel alloy or silver-gold-zirconium alloy.

9. The connector assembly using a new shielding material according to any of claim 4 or 6, wherein the carbon-containing conductor comprises one or more selected from the group consisting of graphite-silver composite, graphene-silver composite, graphite powder, carbon nanotube material, and graphene material.

10. The connector assembly using a new shielding material according to claim 4, wherein, the conductive paint is attached on the outer periphery of the insulation layer by brush coating or dip coating or spray coating.

11. The connector assembly using a new shielding material according to claim 6, wherein the conductive plastic is formed on the outer periphery of the insulation layer by extrusion or injection molding or dip molding or blow molding or foaming or 3D printing processes.

12. The connector assembly using a new shielding material according to claim 1, wherein the inner shell is electrically connected to the conductive medium layer by conductive adhesive bonding or welding or screw connection or crimping or clamping.

13. The connector assembly using a new shielding material according to claim 1, wherein conductivity of the conductive medium layer is greater than 4.8×10⁶ S/m.

14. The connector assembly using a new shielding material according to claim 1, wherein an impedance between the conductive medium layer and the inner shell is less than 80 mΩ.

15. The connector assembly using a new shielding material according to claim 1, wherein a transfer impedance of the conductive medium layer is less than 100 mΩ.

16. The connector assembly using a new shielding material according to claim 1, wherein a transfer impedance of the inner shell is less than 100 mΩ.

17. The connector assembly using a new shielding material according to claim 1, wherein a shielding device is arranged between the inner shell and the conductive medium layer, and the shielding device is electrically connected to the inner shell and the conductive medium layer, respectively.

18. The connector assembly using a new shielding material according to claim 17, wherein an impedance between the conductive medium layer and the shielding device is less than 80 mΩ, and an impedance between the shielding device and the inner shell is less than 80 mΩ.

19. The connector assembly using a new shielding material according to claim 1, wherein the electrical connection skeleton has a cross section in shape of one or more selected from the group consisting of circular, oval, rectangular, polygonal, A-shaped, B-shaped, D-shaped, M-shaped, N-shaped, O-shaped, S-shaped, E-shaped, F-shaped, H-shaped, K-shaped, L-shaped, T-shaped, P-shaped, U-shaped, V-shaped, W-shaped, X-shaped, Y-shaped, Z-shaped, semi-arc, arc, and waved shape.

20. The connector assembly using a new shielding material according to claim 1, wherein the cross section of the electrical connection skeleton is of a polygon, and each corner of the polygon is rounded or chamfered.

21. The connector assembly using a new shielding material according to claim 1, wherein at least part of the electrical connection skeleton is a flexible body.

22. The connector assembly using a new shielding material according to claim 1, wherein the electrical connection skeleton comprises at least one bending portion.

23. The connector assembly using a new shielding material according to claim 1, wherein an outer periphery of the conductive medium layer is further wrapped with an outer insulation layer.

24. The connector assembly using a new shielding material according to claim 1, wherein a thickness of the conductive medium layer is 0.5 to 2.8 mm.

25. The connector assembly using a new shielding material according to claim 1, wherein a cross sectional area of the electrical connection skeleton is 3.5 to 240 mm².

26. The connector assembly using a new shielding material according to claim 1, wherein one of the connectors is a charging socket.

27. A vehicle, comprising a connector assembly using a new shielding material according to any of claims 1 to 26, and a vehicle body.

28. The vehicle according to claim 27, wherein a distance between the electrical connection skeleton and the vehicle body is greater than or equal to 4 mm.
